# EUROPÄISCHE PATENTANMELDUNG

(11) **EP 1 260 271 A2**
(43) Veröffentlichungstag der Anmeldung: **27.11.2002**
(21) Anmeldenummer: 02010419.6
(22) Anmeldetag: 08.05.2002
(51) Int. Cl.: B02C 13/20, B03B 9/06

(54) **Verfahren und Vorrichtung zur Zerlegung von Altstoffen in wiederverwendbare Bestandteile, insbesondere zum Recycling von Holzwerkstoffen, Altmöbeln, Kfz-Verbundwerkstoffen und ähnlichen Produkten**

(30) Priorität: 19.05.2001 DE 10124717
(71) Anmelder: Hesch, Rolf, Dr., 32657 Lemgo-Lüerdissen (DE)
(72) Erfinder: Hesch, Rolf, Dr., 32657 Lemgo-Lüerdissen (DE)
(74) Vertreter: Frank, Gerhard, Dipl.-Phys.

(57) **Zusammenfassung**

Es wird ein Verfahren zur Zerlegung von Altstoffen oder Gegenständen, insbesondere aus dem Holz- oder Kfz-Bereich, in wiederverwendbare Bestandteile vorgeschlagen, wobei in diesem Verfahren beschleunigte Altstoffteile mit Zerlegungswerkzeugen wechselwirken. Die Zerlegung der Altstoffe erfolgt wahlweise durch Prall, Verformungsspannung, Biegebeanspruchung, Reibung und/oder Scherung, indem Form und Anordnung der Zerlegungswerkzeuge auf die Struktur und Größe der zugeführten Altstoffe und/oder der gewonnenen Recyclate eingestellt und/oder ausgewählt werden.

## Beschreibung

### Technischer Hintergrund

Die Erfindung hat ein Verfahren und eine Vorrichtung zum Gegenstand, um Holzwerkstoffe, insbesondere Span- und Faserwerkstoffe, Altmöbel, Verbundwerkstoffe aus dem Kfz-Bereich u.ä. in wiederverwendbare Einzelbestandteile, also Späne und Faserbündel, Fasern, Granulate, Pulver u. ä. zu zerlegen. In besonderem Masse ist das erfindungsgemässe Verfahren und die dazu vorgesehene Vorrichtung darauf orientiert, den Schlankheitsgrad (Verhältnis Länge /Durchmesser) der Späne, Faserbündel und Fasern möglichst ohne nennenswerte Kürzung zu erhalten. Der Schlankheitsgrad ist eine wesentliche Voraussetzung für hohe Festigkeitswerte und eine geschlossene Oberfläche neu herzustellender Werkstoffe und Verbundwerkstoffe.

### Stand der Technik

Es gibt bereits mehrere Verfahren zum recyclen oben genannter Stoffe. Sie stellen aber Lösungen dar, die teilweise zwar kostengünstig sind, aber den Schlankheitsgrad in erheblichem Masse schädigen. Das geht bis zur Granulierung der Stoffe, was meist zu einem minderwertigen Recyclat führt. Andere Verfahren sind gut geeignet, einen hohen Schlankheitsgrad zu erhalten, aber der Aufwand und die Kosten sind erheblich. Darüber hinaus sind sie in ihrer Durchsatzleistung beschränkt, was sich zusätzlich kostenmässig ungünstig auswirkt. Für einige Altprodukte gibt es aber auch noch kein geeignetes Wiederaufbereitungsverfahren, so dass nur die thermische Entsorgung übrig bleibt.

Die einfachste Lösung, die aber den Schlankheitsgrad stark beeinträchtigt, ist das mechanische Zerkleinern genannter Stoffe in einem Shredder oder einer Hammermühle. Shreddern kann ein- oder zweistufig gestaltet werden. Shredder sind abgewandelte Hammermühlen mit horizontalem oder vertikalem Einzug und unterschiedlich geformten Werkzeugen, mit oder ohne Mahlbahn als Gegenlager zum Hammerwerk, mit oder ohne den Mahlraum umschlingenden, stationären Sieb- oder Rostteil. Das mit diesem System erzeugte Produkt hat eher die Qualität eines Granulates oder Füllstoffes.

Eine gewisse Verbesserung der Qualität kann mit oben genannten Shredder-Systemen bei der Wiederaufbereitung von Holzwerkstoffen erreicht werden, wenn das Aufgabegut befeuchtet ist, um seine Sprödigkeit zu mindern. Dabei entsteht weniger Feingut und weniger Bruch quer zur Faserachse. Shredder, Hammermühlen u. ä. Maschinen sind aber relativ feuchtigkeitsempfindlich. Mit zunehmender Feuchtigkeit sinkt die Durchsatzleistung progressiv ab. Zwischen 30 und 40 % atro fangen Verstopfungserscheinungen an. Bei polymerhaltigen Verbundwerkstoffen stellt sich die Frage der Befeuchtung oder Verstopfung in der Regel nicht, da sie keine oder wenig Feuchtigkeit aufnehmen können.

Sehr viel bessere Ergebnisse werden zumindest bei Holzwerkstoffen erreicht, wenn rman gemäß DE 195 09 152 oben genannte Stoffe zunächst auf Kantenlängen um 10 - 20 cm vorzerkleinert und dann mit einer Tränk- und Imprägnierlösung imprägniert und letztlich einer Dampftemperatur von 80 bis 120 Grad einem Autoklav während einer längeren Einwirkzeit aussetzt. Die dabei verwendeten Imprägnierlösungen werden so formuliert, dass sie eine hydrolisierende Wirkung auf die Klebstofffuge ausüben mit dem Ergebnis, dass sich z. B. die Späne einer Spanplatte einerseits durch die Hydrolisierung der Klebstofffuge, andererseits durch den entstehenden Quelldruck voneinander lösen. Sie können dann anschliessend durch Siebe o. ä. voneinander getrennt und fraktioniert werden. Das Ergebnis ist ein hervorragender Recyclatspan mit weitgehend unvermindertem Schlankheitsgrad. Aber das Verfahren ist relativ aufwendig. Es müssen hydrolisierende Chemikalien zugeführt werden. Um ihre Eindringung in das vorzerkleinerte Material zu beschieunigen, muß in einem Druckbehälter Unterdruck angelegt werden. Es rnuß schliesslich Dampf in den Druckbehälter mit einem Druck bis 2 bar eingebracht werden.

Die Leistung dieses Chargenbetriebes ist gering, setzt man die Gesamtinvestition und die Betriebskosten ins Verhältnis zur Durchsatzleistung, so erhält man ein sehr gutes Produkt, aber zu hohen Kosten.

Die AS 1 201 045 weist gewisse Analogien zu DE 195 09 152 auf. Es kommen allerdings keine Chemikalien zum Einsatz, dafür aber ein Dampfdruck bis 5 bar. Nach einer Einwirkzeit von mehreren Stunden lösen sich Spanwerkstoffe in Einzelbestandteile auf und können durch Siebung voneinander getrennt werden.

EP 0 581 039 stellt ein weiteres Verfahren dar, das ebenfalls auf der Grundlage eines Dampfaufschlusses arbeitet. Plattenförmige Elemente, Altmöbel mit oder ohne Beschichtung, werden in grössere Teile gebrochen, so dass sie im Druckraum eines Autoklaven Platz finden. Anschliessend wird der Autoklav mit Dampf im Temperaturbereich zwischen 120 und 180° beaufschlagt. Dadurch wird gleichzeitig eine Hydrolisierung hydrolisierbarer Bindemittel und eine Aufquellung der Späne bewirkt, was zu einer Auflösung des Spanplattenverbandes führt. Im Gegensatz zu den oben genannten Druckschriften wird im vorliegenden Fall das Spanmaterial anschliessend mit einer Reinigungsflüssigkeit von Hydrolyseprodukten gereinigt. Die Notwendigkeit, hydrolysefördernde Chemikalien einnzusetzen oder Reinigungflüssigkeiten, insbesondere aber die Notwendigkeit Autoklave einzusetzen und mit Dampf irn Druckbereich zwischen 2 und 5 bar zu arbeiten, gestalten oben genannte Verfahren kostenungünstig.

### Darstellung der Erfindung

Aufgabe der verliegenden Erfindung ist es, ein Verfahren anzubieten und die dazu erforderliche Produktionsanlage, um ohne Chemikalien, ohne Autoklav, ohne Reinigungsflüssigkeit, ohne Frischdampf ein Recyclat mit guten Schlankheitsgraden und geringen Kosten auf rein mechanischem Wege und in einem kontinuierlichen Produktionsverfahren zu erzeugen. Vor allem soll das erfindungsgemässe Verfahren und Vorrichtung nicht nur auf Holzwerkstoffe und Altmöbel anwendbar sein, sondern auch auf stark polymer- und duromerhaltige Werkstoffe und Verbundwerkstoffe, die sich durch Feuchtigkeit nicht in einen leichter zerlegbaren Zustand versetzen lassen.

### Beschreibung eines Ausführungsbeispiels

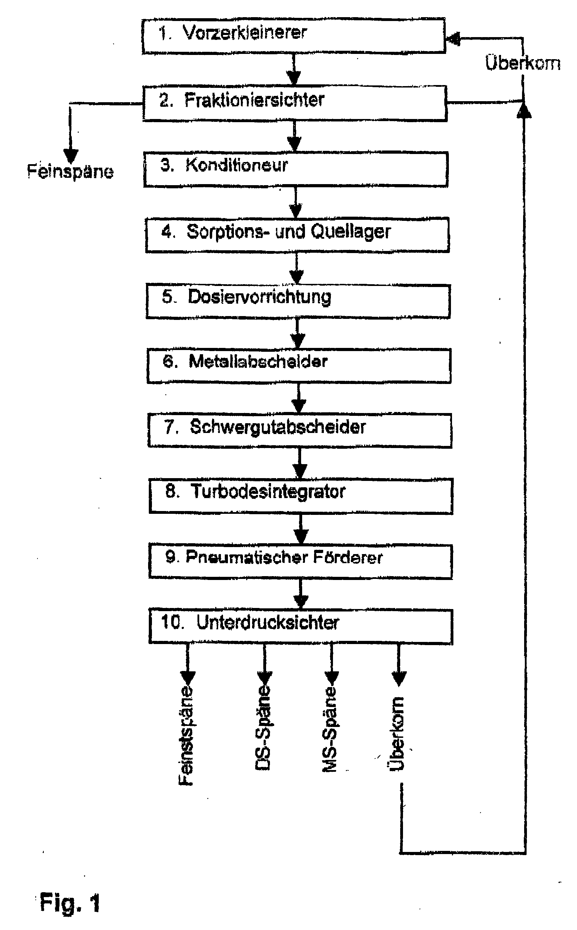

Ein Grundprinzip des erfindungsgemässen Verfahrens mit seinen vorteilhaften Ausbildungen ist als Beispiel in Bild 1 dargestellt:

Das sperrige Aufgabegut wird in einen Vorzerkleinerer (1 ) aufgegeben und in Bruchstücke mit Kantenlängen ven 10 x 10 bis 100 x 100 mm, vorzugsweise um 20 mrn zerlegt. Darunter sind keine quadratischen oder rechteckigen Bruchstücke zu verstehen, sondern Bruchstücke auch von jeglicher unregelmässiger Form im Bereich dieser Grössenordnung.

Als Vorzerkleinerer sind Maschinen zu bevorzugen, die eine Vielzahl von Rissen und Haarrissen in den Bruchstücken verursachen, in denen sich Kapillarkräfte für die noch aufzubringende Feuchtigkeit entwickeln können, soweit es sich um quellfähige Werkstoffe handelt. Es kommen sowohl Langsamläufer, z. B. nach dem Scherrotorprinzip infrage, als auch Schnellläufer wie Hammermühlen und Shredder in Ausführungsformen, welche die Riss- und Haarrissbildung besonders fördern. Bei der Vorzerkleinerung werden, wie Versuche das gezeigt haben, bereits Späne und Faserbündel in erheblicher Menge und mit guten Schlankheitsgraden aus dem Verbund gerissen.

Da das zu recyclende Material für die endgültige Auflösung zwecks Sorption und Aufquellung vielfach befeuchtet werden muss, bietet es sich an, die Späne und Faserbündel, die bereits eine befriedigende Geometrie aufweisen, über einen Fraktioniersichter (2) aus dem Materialstrom auszuscheiden. Je nach Erfordernissen des Endproduktes kann es sich bei dem Fraktioniersichter um ein einfaches Sieb handeln, es kann sich aber auch um eine Kombination von Sieb/Trommelsieb und pneumatischem Sichter handeln. Die Feinspäne werden z. B. dem DS-Strang zugeführt. Es können an dieser Stelle auch schon gröbere Späne z. B. für MS-Zwecke ausgesondert werden. Der Fraktioniersichter (2) bietet sich an, um die Befeuchtung dieser bereits gut verwendbaren Fraktionen zu vermeiden, für deren Trocknung sonst Energie aufgewandt werden müsste.

In einem nachfolgenden Konditioneur (3) wird das vorzerkleinerte Material, welches der vorgegebenen Grösse entspricht, mit Feuchtigkeit beaufschlagt. Diese Feuchtigkeit kann in Form von Wasser eingebracht werden, ebenso aber auch in Form von Abdampf oder atmosphärischem Frischdampf. Im Falle der Verwendung von Wasser ist ein Zusatz von benetzungsfördernden Additiven im erfindungsgemässen Verfahren einbezogen, um die aufquellende Wirkung des Wassers auf das Holz ebenso wie auf das Bindemittel zu beschleunigen. Bei atmosphärischem Dampf kann ein solches Additiv zugesetzt werden, ist aber nicht unbedingt erforderlich, da heiße Feuchtigkeit die Quellung von Holz naturgemäss stark beschleunigt ebenso wie die Quellung und Anlösung von nichtfeuchtigkeitsbeständigen Bindemitteln. In Spanplatten- und MDF-Werken sind Trocknergase ein ergiebige Quelle für atmosphärischen Dampf mit annähernd 100 %iger Wassersättigung und einer Temperatur um oder knapp unter 100 C.

Das im Konditioneur intensiv mit Feuchtigkeit und eventuell mit Wärme beaufschlagte Schüttgut wird in ein Sorptions- und Quelllager (4) eingebracht. Die Grösse des Sorptions- und Quelllagers richtet sich nach der erforderlichen Durchsatzmenge und über die Art der Feuchtigkeitszuführung erreichbaren Sorptions- und Quellgeschwindigkeit. Wenn mit atmosphärischem Dampf gearbeitet wird, ist ein geringeres Volumen erforderlich, da das Schüttgut unter Wärmeeinfluss schneller aufquillt und die Festigkeit seines Verbundes verliert. Als Sorptions- und Quelllager kommt beispielsweise ein Schubboden- oder Zugbodensilo infrage oder ein Wanderschneckensilo oder Rotationsschneckensilo, die alle nach dem Prinzip ,first in, first out" arbeiten. Während des Durchwanderns des Schüttgutes durch das Silo oder die Grosshalde hat das Schüttgut Zeit, die Feuchtigkeit an den Nebenvalenzen der Micelle anzulagern und so zu quellen. Ausserdem werden durch die Feuchtigkeitszufuhr eingetrocknete Verformungsspannungen der Späne freigesetzt, was ebenfalls zu einer Auflösung des Gefüges durch spring back beiträgt. Letztlich bewirkt die Feuchtigkeit, eventuell unterstützt durch Wärme, daß die überwiegend verwendeten Klebstoffe mit beschränkter Feuchtigkeitsbeständigkeit angelöst werden und ebenfalls aufquellen, was zusammen über die Zeit zu einer Schwächung bis Auflösung des Werkstoffverbundes führt.

Die Verwendung von Trocknerabgasen/-dämpfen bietet zwei Arten von Vorteilen. Zunächst einmal wird die heisse Abluft, die mit Wasser gesättigt ist, einer nützlichen Verwendung zugeführt. Im Normalfall wird die Trocknerabluft nämlich nach entsprechender Reinigung an die Atmosphäre abgegeben, ohne den Wärmeinhalt zu nutzen. Bei Einsatz für den erfindungsgemässen Zweck wird die Sorption/Quellung durch die gleichzeitig enthaltene Feuchtigkeit und Wärme erheblich beschleunigt. Das Sorptions- und Quelllager (4) kann zudem so ausgeführt werden, dass es zur Reinigung der Trocknerabgase ähnlich wie ein Kiesbettfilter eingesetzt wird, dann nämlich, wenn man die Trocknerabgase durch eine ausreichend hohe Schicht des Schüttgutes im Gegenstromverfahren hindurchfördert. Dabei geben die Trocknergase nicht nur einen grossen Anteil ihrer Feuchtigkeit und Wärme an das Schüttgut ab, sondern auch das in den Abgasen enthaltene Feingut erfährt im Schüttgut eine Filterung und somit Reinigung der Abluft. Dieser Effekt wird besonders dann vorteilhaft wirksam, wenn vor Zuführung der Feuchtigkeit das bereits im Vorzerkleinerer (1 ) erzeugte Feingut durch den Fraktioniersichter (2) ausgesichtet wurde, um den Strömungswiderstand im Schüttgut zu verringern.

Aus dem Sorptions- und Quelllager (4) wird das aufgeweichte und aufgequollene Schüttgut mit Hilfe von bekannten Austragsvorrichtungen einer Dosiervorrichtung (5) zugeführt. Als Dosiervorrichtung ist ein volumetrisches System zu bevorzugen, da es im Feuchtigkeitsbereich, in dem die erfindungsgemässe Anlage gefahren wird, auf Feuchtigkeitsschwankungen nur minimal reagiert, im Gegensatz zu gravimetrischen Systemen.

Das Schüttgut wird sodann über einen Metallabscheider (6) geführt, der allerdings auch zwischen Position (1 ) und (2) und Position (2) und (3) stehen kann.

Um auch nicht ferritische Fremdkörper abscheiden zu können, ist ein Schwergutabscheider (7) vor einem Turbodesintegrator (8) angeordnet, der etwa gemäss der EP 1 035 237 A2 ausgebildet sein kann, wobei aber auch andere Realisierungen möglich sind.

Obige Darstellung stellt lediglich ein Beispiel der verschiedenen Möglichkeiten dar, die eigentliche Zerlegung vorzubereiten und zu fördern. Insbesondere bei Werkstoffen und Verbundwerkstoffen, die holz- oder andere ligno-zellulosehaltige Bestandteile oder allgemein quellfähige Bestandteile enthalten, stellt eine vorherige Aufquellung eine starke Erleichterung der Zerlegungsarbeit dar und vermindert die Materialschädigung während der Zerlegung. Zur Förderung der Aufquellung und Minderung der Festigkeit von Klebstofffugen sollen erfindungsgemäss auch Mittel eingesetzt werden, welche die Benetzung mit Quellmitteln fördern ebenso wie biologische Mittel, welche die Schwächung des Verbundes herbeiführen, z. B. Bakterienkulturen oder Mikroorganismen im allgemeinen. Insbesondere bei der Anwendung von Mikroorganismen ist dies in großen Aussenhalden mit Schub- oder Zugbodenaustrag oder auch mit Schaufelladern sinnvoll, um einerseits der Tätigkeit der Mikroorganismen die erforderliche Zeit zu gewähren, andererseits aber auch Regenfälle für die Feuchterhaltung des zu zerlegenden Gutes ausnützen zu können. Naturlich müssen solche Halden zurn Schutz des Grundwassers nach unten abgedichtet sein. Eventuell anfallender Flüssigkeitsüberschuss wird über Pumpen von oben auf das neu aufgebrachte Material zwecks Durchtränkung aufgegeben.

Bei Holz und ähnlichen ligno-zellulosehaltigen Aufgabegütern kommt als weitere interessante Variante hinzu, das Material zunachst in einer Waschanlage, wie sie z. B. in der MDF-Industrie üblich ist, in besonders intensiver Weise anzufeuchten. Der für MDF eforderliche Wascheffekt entfällt hierbei allerdings, da er nicht benötigt wird. Sehr wohl ist eine solche Waschanlage aber in der Lage, schwere Bestandteile mit einer höheren Dichte als die des Wassers abzuscheiden und so Magnetabscheider und Schwergutabscheider überflüssig zu machen. Mit Hilfe dieser Waschanlage, die im Nachfolgenden die Funktion einer Intensivbenetzungs- und Tränkungsanlage hat, kann das bei der Vorzerkleinerung erzeugte Kapillarsystem besondere schnell mit Flüssigkeit angereichert werden. Dies umso mehr, wenn warmes oder heisses Wasser angewendet wird. Zu entsorgende Abwässer entstehen dabei nicht, denn über entsprechende Entwässerungsförderer wird das abtropfende Wasser entweder der Benetzungsanlage zurückgegeben oder auf das neu vorzerkleinerte Material aufgegeben und zur weiteren Aufquellung verfügbar gemacht. Grundwasser- oder Umweltprobleme entstehen somit nicht.

Obige Beschreibung trifft, wie bereits ausgeführt, nur auf quellfähige Stoffe und Verbundwerke daraus zu. Bei überwiegend oder ganz aus polymeren oder duromeren Hauptbestandteilen des wiederaufzubereitenden Materials kann mit Feuchtigkeit und Quellung in der Regel nichts oder wenig erreicht werden. Diese vorbereitenden Massnahmen entfallen somit.

Die eigentliche Zerlegungsarbeit zu Einzelspänen bzw. Faserbündeln bzw. Fasem bzw. Granulaten bzw. Pulvem o. ä. erfolgt im Turbodesintegrator (8) in allen Fällen, gleichgültig, ob mit Feuchtigkeit vorbehandelt werden konnte oder nicht.

Aus dem Turbodesintegrator (8) wird das zerlegte Material mit Hilfe eines pneumatischen Förderers (9) in einen Unterdrucksichter (10) gefördert. Die erste Funktion des Unterdrucksichters besteht darin, das Recyclat aus dem Förderstrom abzuscheiden. Da das Material in einer Flugparabel durch den Unterdrucksichter fliegt, ergibt sich darin eine pneumetische Sichtung im Sinne eines Querstromsichters. Je nach Masse und kinetischer Energie einerseits und spezifischer Oberfläche der Einzeiteilchen findet eine Sichtung in eine wählbare Anzahl von Fraktionen statt, z. B Feinstspäne, DS-Späne, MS-Späne, Überkorn. Das Überkorn kann der Vorzerkleinerung (1 ) zugeführt und nachzerkleinert werden.

Oben genannte Massnahmen sind als Vorbereitungsmassnahmen Bestandteil des Verfahrens in seinen unterschiedlichen Varianten, je nach Altstoff, der aufbereitet werden soll. Die vorbereitendern Schritte sind insbesonders bei quellfähigen Altstoffen von grosser Bedeutung, wenn gute Schlankheitsgrade erzielt werden sollen.

Die eigentliche Zerlegung im Turbodesintegrator (8) erfolgt als fundamentales Wirkprinzip durch das Zusammenspiel vorzugsweise entgegengesetzt drehender Rotoren mit sehr hohem Energieeintrag, der je nach Art und Anordnung der Werkzeuge in Prall, Verformungsspannung, Biegebeanspruchung, Reibung sowie Scherung in verschiedenen Zonen und Ebenen des zu zerlegenden Gutes wirksam wird. Zur Charakterisierung der Grössenordnung des Energieeintrages sei angeführt, dass eine Maschine mit einem Durchmesser des Innenrotors von beispielsweise 1400 mm und einem Flugkreis der Werkzeuge des gegenläufigen Rotors von beispielsweise 1.410 mm an beiden Rotoren mit Motoren von je 100 bis 300 kW, vorzugsweise um 200 kW motorisiert ist. Eine Maschine dieser Grössenordnung erzeugt einen Schallpegel zwischen 90 und 130 dB (A) je nach Drehzahl. Der Drehzahlbereich des Innenrotors bewegt sich in der Regel zwischen 500 und 2.000 UpM, des äusseren Rotors zwischen 0 und 2.000 UpM, vorzugsweise um 1.200 UpM.

Von entscheidender Bedeutung ist die Art und die Stellung der Zerlegungswerkzeuge im äußeren Rotor. Auf jeden Fall ist die Anordnung so gewählt, dass es zu keinerlei Verstopfungen kommen kann, da brennbare Materialien in Flammen aufgehen würden und polymere Materialien aufschmelzen und die Maschine verstopfen würden. Das Austragen des Zerlegungmaterials muss durch die Form und Anordnung der Werkzeuge in jedem Fall gewährleistet sein. Der Abstand der Werkzeuge zueinander muss die Grundvoraussetzung erfüllen, dass sich auf den Werkzeugen kein Material aufbauen kann. Dies ist in erster Linie eine Frage einer ausreichenden Beabstandung und der Ausbildung ausreichend hoher Zentrifugalkräfte, um ein Abschleudern des Materials zu gewährleisten.

Da erfindungsgemäss das Verfahren und die Vorrichtung für eine Vielzahl von Altprodukten eingesetzt werden soll, gehört es zu den erfindungsgemässen Merkmalen des Vorfahrens und der Anlage, daß die Zerlegungswerkzeuge des äußeren Rings in vielfältiger Welse und in gezielter Anpassung an das zu verarbeitende Material und das angestrebte Recyclingprodukt ausgestaltet werden.

Die unterschiedlichen Wirkweisen ein- und desselben Werkzeuges seien an einem konkreten und in langen Versuchsserien erprobten Beispiel dargestellt:

Bestehen die Zerlegungswerkzeuge des äußeren Rotors beispielsweise aus Flacheisen von 15 mm Stärke und 50 mm Breite, so können mit diesem Werkzeug extrem unterschiedliche Ergebnisse erzielt werden. Wird es so eingebaut, daß das zu zerlegende Material vom inneren Rotor gegen die Schmalkante des Werkzeugs geschleudert wird, so wird das dagegengeschleuderte Material in erster Linie auf Biegung beansprucht. Als Folge der Biegebeanspruchung entwickeln sich in den Schichten des Materials Scherkräfte, die dazu führen, daß beispielsweise Späne einer Spanplatte gegeneinander verschoben werden und sich so voneinander lösen. Die Länge der Späne wird dabei kaum vermindert, insbesondere, wenn eine ausreichende Quellung vorausgegangen ist. Setzt man das gleiche Werkzeug dagegen so in den äußeren Rotor ein, dass das Aufgabegut nicht gegen die Schmalseite des Werkzeugs, sondern gegen seine Breitseite geschleudert wird, so kommt es zu keiner Biegebeanspruchung, sondern vorzugsweise zu einer Prallbeanspruchung. Dabei findet eine sehr viel intensivere Zerkleinerung statt, als bei dem genannten Beispiel mit der Schmalseite des Werkzeugs. Es vverden nicht nur die ursprünglichen Späne voneinander gelöst, sondern durch die extreme Prallbeanspruchung werden zumindest die größeren Späne in eine unterschiedliche Anzahl von Teilspänen zerlegt, d. h., es findet außer der Zerlegung des Verbundes auch eine Zerlegung der Einzelspäne in eine Mehrzahl von kleineren Spänen statt. Im Extremfall kann mit dieser Werkzeugeinstellung sogar eine Materialzerstörung bewirkt werden, die bei einem Prall gegen die Schmalkante nicht eintreten kann.

Bei Verwendung des oben genannten Flacheisens kann die Wirkweise in weiten Bereichen dadurch verändert werden, dass die Schmalseite unterschiedlich grosse Radien bis hin zur messerartigen Schneide erhält. Ein großer Radius wird zu einer sanften Zerlegung führen, ein kleiner, eher messerartiger Radius führt zu einer extremen Biegebeanspruchung und dann eher zu Brüchen quer zur Faserachse des Spanes o. ä. als zu Scherspannungen, die eine Zerlegung des Verbandes bewirkt und vorteilhafte Schlankheitsgrade ergibt.

Soll beispielsweise ein Pkw-Innenverkleidungsteil, das vorzugsweise aus Polymerfasern besteht, oder einer Mischung aus Polymerfasern und Naturfasern, so reichen oben beschriebene flacheisenähnliche Werkzeuge für eine vorteilhafte Zerlegung nicht aus. Solche Formteile haben ihren Zusammenhalt überwiegend durch Thermobonding erhalten, d. h., die Polymerfasern wurden durch Aufschmelzen an ihren Kreuzungspunkten miteinander verschmolzen. Im Zuge der Entwicklungsarbeiten ergab sich überraschenderweise, daß anscheinend homogen verschmolzene Zonen solcher Formteile in Wirklichkeit immer noch die Faserstruktur beibehalten haben, wenn auch nicht ohne weiteres erkennbar. Die Verschmelzung ist bei höherer Dichte aber so stark, daß reiner Prall eine nur unzureichende Zerlegung in Einzelbestandteile bzw. Einzelfasern bewirkt. Hier bedarf es einer Kombination von Biegespannung, Prallwirkung sowie Zug oder Reissbeanspruchung, um aus dem Aufgabegut nicht eine amorphe Masse zu erzeugen, sondern ein faseriges Material, was insbesondere bei Naturfasern angestrebt wird. Die Kombination der obigen Wirkprinzipien wird über die Ausgestaltung der Werkzeuge erreicht. Das oben genannte einfache Flacheisen als Prallwerkzeug muss für den vorliegenden Anwendungszweck als Kammwerkzeug ausgeführt werden, wobei auch die Enden des inneren Rotors zweckmässigerweise als Kammwerkzeug auszuführen sind. An diesen beidseitigen Kammwerkzeugen kann Prall- und Biegebeanspruchung zugleich stattfinden. Dadurch, dass die Enden aber gegeneinander kämmen, werden durch Prall und Biegung nicht ausreichend zerlegte Teile zwischen den gegeneinander rotierenden Kämmen auf Zug beansprucht und auseinander gerissen. Dabei zeigt sich dann, dass selbst zwischen scheinbar miteinander verschmolzenen Polymerfasern immer noch Grenzzonen mit verminderter Festigkeit übrig geblieben sind, in denen die Fasern dann gegeneinander gleiten.

Die Kammwerkzeuge beider Rotoren können streng radial ausgerichtet werden und in dieser Stellung ineinander kämmen. Ebenso ist aber möglich, beide Kämme in eine eher tangentiale Anordnung zu den beiden Rotoren zu setzen und an ihren Vorderflächen sägezahnartig oder messerartig angeschärft zu gestalten. Derart ausgestaltete Werkzeuge üben zusätzlich zu Prall und Scherung auch eine gewisse schneidende Wirkung aus, um besonders schwer zerlegbare Materialien zusätzlich zu Prall, Biege-, Zugbeanspruchung auch einer schneidenden Zerlegung zu unterwerfen.

Dle Ausführung der Kämmwerkzeuge kann in rechteckigen Kämmen, dachförmigen Kämmen, prismenförmigen Kämmen u. a. m. erfolgen.

Soll aufgrund der gewünschten Geometrie das Endprodukts oder der Erfordernisse des Aufgabeproduktes Reibung und Scherung als Wirkprinzip zur Anwendung kommen, allein oder in Kombination mit oben genannten Wirkprinzipien, so können eher messerartig gestaltete Flacheisen in dichterer Beabstandung im äusseren Rotor untergebracht werden, so daß der innere Rotor das Aufgabegut über die Werkzeuge des äusseren Rotors hinwegschiebt und so eine Reib- oder Scherbeanspruchung auslöst. Diese Anordnung der Werkzeuge des äusseren Rotors unterscheidet sich von einer konventionellen Reib- oder Mahlbahn dadurch, daß zwischen den erfindungsgemässen Werkzeugen jeweils ausreichende Zwischenräume angeordnet bleiben, so daß das zerlegte Material durch diese ohne Verstopfung hindurchtreten kann. In weiterer Ausgestaltung kann das Werkzeug des äusseren Ringes auch in einem gestanzten Lochblech bestehen, wobei dann die Kanten des Lochbleches, welche der Bewegungsrichtung des inneren Rotors entgegenstehen, als Prall-, Reib- und/oder Scherkanten wirken. Dieser Effekt kann in Richtung Scherung und Prallwirkung dadurch verstärkt werden, daß dle Querstege des Lochbleches zum inneren Rotor hin aufgekantet werden oder geschränkt werden. Die Entwicklungsarbeiten haben gezeigt, dass neben der Wirkweise des Turbodesintegrators mit seinem Doppelrotorsystem und dem hohen Energieeintrag die Ausgestaltung der Werkzeuge in entscheidendem Masse über die Möglichkeit entscheidet, Abfallprodukte in Wertstoffe zurück zu verwandeln und deren Geometrie in der gewünschten Form zu gestalten.

## Patentansprüche

1. Verfahren zur Zerlegung von Altstoffen oder Gegenständen, insbesondere aus dem Holz- oder Kfz-Bereich in wiederverwendbare Bestandteile, unter Verwendung von Zerlegungswerkzeugen, mit denen die beschleunigten Altstoffteile wechselwirken, **dadurch gekennzeichnet, dass** die Zerlegung der Altstoffteile wahlweise durch Prall, Verformungsspannung, Biegebeanspruchung, Reibung und/oder Scherung erfolgt, indem Form und Anordnung der Zerlegungswerkzeuge auf die Stuktur und Grösse der zugeführten Altstoffe und/oder der gewonnenen Recyclate eingestellt und/oder ausgewählt werden.

2. Verfahren nach Anspruch 1, **dadurch gekennzeichnet, dass** die Altstoffe vor der Zerlegung einer Vorbehandlung unterzogen werden, die auch eine Fraktionierung beinhalten kann.

3. Verfahren nach Anspruch 2, **dadurch gekennzeichnet, dass** die Vorbehandlung von quellfähigen Altstoffen die Zuführung von Flüssigkeiten in Form von Benetzung, Tränkung oder Bedampfung beinhaltet.

4. Verfahren nach Anspruch 2, **dadurch gekennzeichnet, dass** die Vorbehandlung die Zuführung von biologischen Mitteln wie Mikroorganismen oder Bakterienkulturen beinhaltet.

5. Verfahren nach Anspruch 3 oder 4, **dadurch gekennzeichnet, dass** die Altstoffe während der Vorbehandlung in einem vorzugsweise offenen Speicher für die Dauer einer einstellbaren Einwirkungszeit der Flüssigkeiten und/oder der biologischen Mittel gelagert werden.

6. Verfahren nach Anspruch 1, **dadurch gekennzeichnet, dass** die wiedergewonnenen Recyclate einer Nachbehandlung unterzogen werden.

7. Verfahren nach Anspruch 1, **dadurch gekennzeichnet, dass** die Nachbehandlung eine Abtrennung des Recyclats aus dem nach erfolgter Zerlegung anfallenden Förderstrom beinhaltet.

8. Verfahren nach Anspruch 7, **dadurch gekennzeichnet, dass** die Abtrennung eine pneumatische Sichtung beinhaltet, durch die eine Fraktionierung des Förderstroms erfolgt.

9. Verfahren nach Anspruch 7, **dadurch gekennzeichnet, dass** mindestens eine Fraktion, insbesondere das Überkorn, wieder der Vorbehandlung zugeführt wird.

10. Vorrichtung zur Durchführung des Verfahrens nach Anspruch 1, mit Zerlegungswerkzeugen und mindestens einem Rotor, **dadurch gekennzeichnet, dass** die Zerlegungswerkzeuge auf einem Aussenring/Rotorring angeordnet sind, der relativ zu einem zur Beschleunigung der Altstoffteile dienenden Innenrotor und koaxial zu diesem rotiert.

11. Vorrichtung nach Anspruch 10, **dadurch gekennzeichnet, dass** beide Rotoren mit einer Drehzahl bis zu 2000 UpM rotieren.

12. Vorrichtung nach Anspruch 10, **dadurch gekennzeichnet, dass** zur Vermeidung von Verstopfungen zum Energieeintrag von den Zerlegungswerkzeugen in die Altstoffteile bei einem Rotordurchmesser zwischen 1 und 2 Metern die Rotoren mit einer Leistung von bis zu 300 kW angetrieben werden.

13. Vorrichtung nach Anspruch 10, **dadurch gekennzeichnet, dass** die Zerlegungswerkzeuge Flacheisen beinhalten.

14. Vorrichtung nach Anspruch 11, **dadurch gekennzeichnet, dass** die Flacheisen als Kämmwekzeuge ausgebildet sind.

15. Vorrichtung nach Anspruch 10, **dadurch gekennzeichnet, dass** die Zerlegungswerkzeuge von einem Lochblech gebildet sind.

16. Vorrichtung nach Anspruch 15, **dadurch gekennzeichnet, dass** die gestanzten Querstege des Lochblechs zum Innenrotor hin aufgekantet oder geschränkt sind.
